# FASCICULE DE BREVET EUROPEEN

(11) **EP 3 722 154 B1**
(45) Date de publication et mention de la délivrance du brevet: **17.11.2021**
(21) Numéro de dépôt: 19168135.2
(22) Date de dépôt: 09.04.2019
(51) Int. Cl.: B60R 7/04

(54) **ENSEMBLE COULISSANT POUR HABITACLE DE VEHICULE**
SCHIEBEEINHEIT FÜR FAHRZEUGINNENRAUM
SLIDING ASSEMBLY FOR VEHICLE PASSENGER COMPARTMENT

(43) Date de publication de la demande: 14.10.2020
(73) Titulaire: Greystal, 49260 Montreuil-Bellay (FR)
(72) Inventeur: CARPUAT, Rémy, 49260 MONTREUIL-BELLAY (FR)
(74) Mandataire: Cabinet Le Guen Maillet

(56) Documents cités:
- EP-A1- 1 179 449
- DE-A1- 2 052 764
- US-A1- 2008 067 828

## Description

### DOMAINE TECHNIQUE

La présente invention concerne un ensemble coulissant pour un habitacle de véhicule ainsi qu'un véhicule comportant au moins un tel ensemble coulissant.

### ETAT DE LA TECHNIQUE ANTERIEURE

Il est connu de mettre en œuvre des ensembles coulissants dans un véhicule. Un tel ensemble comporte par exemple un rail qui est fixé au plancher du véhicule et un coulisseau solidaire d'une console où le coulisseau est mobile en translation le long du rail. Un tel ensemble permet de déplacer la console le long du rail afin d'ajuster sa position.

Un tel ensemble coulissant comporte classiquement des billes en appui contre des surfaces de roulement et il peut arriver qu'à force de déplacement, les billes et/ou les surfaces de roulement subissent une usure.

Une telle usure entraîne alors l'apparition de jeux qui peuvent générer des bruits.

DE 20 52 764 divulgue un ensemble coulissant pour habitacle de véhicule et comportant:
- un rail qui est destiné à être fixé à une paroi du véhicule et s'étendant selon une direction de translation,
- un coulisseau mobile en translation le long du rail et destiné à être solidaire d'un élément du véhicule, où le coulisseau comporte :
- un premier socle qui comporte une première face portante et une première face d'appui opposée à la première face portante,
- deux premières billes disposées l'une à côté de l'autre parallèlement à la direction de translation et portées libres en rotation par la première face portante,
- un deuxième socle qui comporte une deuxième face portante et une deuxième face d'appui opposée à la deuxième face portante,
- deux deuxièmes billes disposées l'une à côté de l'autre parallèlement à la direction de translation et portées libres en rotation par la deuxième face portante,

### EXPOSE DE L'INVENTION

Un objet de la présente invention est de proposer un ensemble coulissant pour un habitacle de véhicule qui ne présente pas les inconvénients de l'état de la technique et qui, en particulier, comporte des moyens qui compensent les jeux d'usure.

A cet effet, est proposé un ensemble coulissant pour habitacle de véhicule et comportant :
- un rail qui est destiné à être fixé à une paroi du véhicule et s'étendant selon une direction de translation,
- un coulisseau mobile en translation le long du rail et destiné à être solidaire d'un élément du véhicule, où le coulisseau comporte :
- un premier socle qui comporte une première face portante et une première face d'appui opposée à la première face portante,
- deux premières billes disposées l'une à côté de l'autre parallèlement à la direction de translation et portées libres en rotation par la première face portante,
- un deuxième socle qui comporte une deuxième face portante et une deuxième face d'appui opposée à la deuxième face portante,
- deux deuxièmes billes disposées l'une à côté de l'autre parallèlement à la direction de translation et portées libres en rotation par la deuxième face portante,
- une pièce intermédiaire réalisée dans un matériau compressible et positionnée entre la première face d'appui et la deuxième face d'appui,
où le rail comporte une rainure en U dans laquelle loge le coulisseau de manière à ce que les premières billes soient contre une première branche du U et de manière à ce que les deuxièmes billes soient contre une deuxième branche du U, et où chaque branche du U comporte une goulotte présentant deux plans de roulement contre lesquels roulent les billes considérées.

Un tel ensemble coulissant comporte ainsi des moyens pour compenser une usure des billes ou des plans de roulement.

Avantageusement, le premier socle comporte une extension qui s'étend depuis le premier socle au-delà du deuxième socle et le deuxième socle est monté coulissant le long de l'extension.

Avantageusement, la première face d'appui comporte un premier logement, la deuxième face d'appui comporte un deuxième logement, et la pièce intermédiaire loge pour partie dans le premier logement et pour partie dans le deuxième logement.

Avantageusement, la pièce intermédiaire comporte un premier plot et un deuxième plot, chacun s'étend selon une direction perpendiculaire entre la première face d'appui et la deuxième face d'appui, le premier socle comporte au niveau de sa première face d'appui un alésage dans lequel loge le premier plot, et le deuxième socle comporte au niveau de sa deuxième face d'appui un alésage dans lequel loge le deuxième plot.

Avantageusement, le coulisseau comporte un troisième socle fixé aux deux premiers socles, le troisième socle comporte une troisième face portante, ledit ensemble coulissant comporte deux troisièmes billes disposées l'une à côté de l'autre parallèlement à la direction de translation et portées libres en rotation par la troisième face portante, le rail comporte une équerre, l'équerre présente un premier plan de roulement et un deuxième plan de roulement, et chaque troisième bille est en appui et roule contre le premier plan de roulement et le deuxième plan de roulement.

L'invention propose également un véhicule comportant une paroi, un élément et un ensemble coulissant selon l'une des variantes précédentes où le rail est fixé à la paroi et où l'élément est fixé au coulisseau.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] est une vue en coupe d'un ensemble coulissant selon l'invention,
[Fig. 2] est une vue éclatée d'un coulisseau selon l'invention, et
[Fig. 3] est une vue en coupe d'un ensemble coulissant selon une variante de l'invention.

### EXPOSE DETAILLE DE MODES DE REALISATION

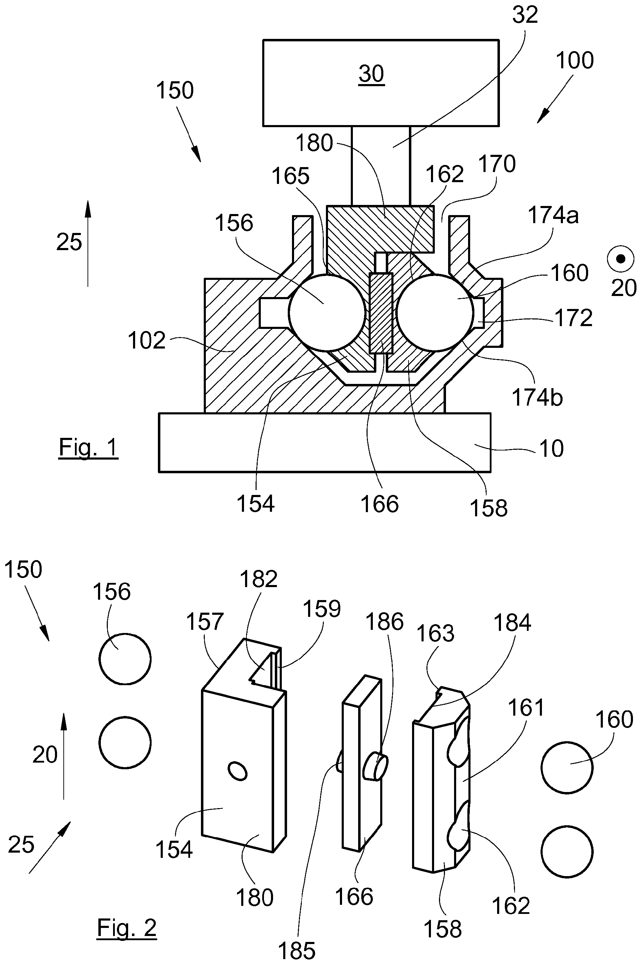

La Fig. 1 montre un ensemble coulissant 100 selon l'invention.

L'ensemble coulissant 100 comporte un rail 102 qui est fixé à une paroi 10 d'un habitacle d'un véhicule comme par exemple un plancher du véhicule.

Le rail 102 définit une direction de translation 20 qui est ici perpendiculaire au plan de la feuille pour la Fig. 1. La Fig. 1 est une coupe selon un plan perpendiculaire à la direction de translation 20.

L'ensemble coulissant 100 comporte également un coulisseau 150 qui est mobile en translation le long du rail 102 parallèlement à la direction de translation 20.

Le coulisseau 150 est solidaire d'un élément 30 du véhicule comme par exemple une console, une vitre coulissante ou tout autre élément qui peut être déplacé parallèlement à la direction de translation 20.

La Fig. 2 montre le coulisseau 150 en vue éclatée.

Le coulisseau 150 comporte un premier socle 154 qui comporte une première face portante 157 et une première face d'appui 159 opposée à la première face portante 157. La première face portante 157 et la première face d'appui 159 sont dans des plans parallèles à la direction de translation 20.

La première face portante 157 porte deux premières billes 156 qui sont disposées l'une à côté de l'autre parallèlement à la direction de translation 20. A cette fin, dans le mode de réalisation de l'invention présenté ici, pour chaque première bille 156, la première face portante 157 comporte un évidement hémisphérique 165 dans lequel la première bille 156 est disposée et libre en rotation.

Le coulisseau 150 comporte également un deuxième socle 158 qui comporte une deuxième face portante 161 et une deuxième face d'appui 163 opposée à la deuxième face portante 161. La deuxième face portante 161 et la deuxième face d'appui 163 sont dans des plans parallèles à la direction de translation 20.

La deuxième face portante 161 porte deux deuxièmes billes 160 qui sont disposées l'une à côté de l'autre parallèlement à la direction de translation 20. A cette fin, dans le mode de réalisation de l'invention présenté ici, pour chaque deuxième bille 160, la deuxième face portante 161 comporte un évidement hémisphérique 162 dans lequel la deuxième bille 160 est disposée et libre en rotation.

Le coulisseau 150 comporte également une pièce intermédiaire 166 qui est réalisée dans un matériau compressible comme par exemple un élastomère compressible. La pièce intermédiaire 166 se positionne entre la première face d'appui 159 et la deuxième face d'appui 163 tandis que les billes 156 et 160 sont orientées à l'opposé c'est-à-dire vers l'extérieur.

Le rail 102 comporte une rainure 170 en U qui s'étend parallèlement à la direction de translation 20 et dans laquelle loge le coulisseau 150 de manière à ce que les premières billes 156 soient contre une première branche du U et de manière à ce que les deuxièmes billes 160 soient contre une deuxième branche du U. Chaque branche du U comporte une goulotte 172 qui présente deux plans de roulement 174a-b qui sont tangents aux billes 156, 160 considérées et contre lesquels roulent lesdites billes 156, 160. Le fond du U est ici fixé à la paroi 10.

Lorsque le coulisseau 150 est introduit dans la rainure 170, les billes 156 et 160 sont en appui contre les plans de roulement 174a-b et la pièce intermédiaire 166 est écrasée tout en évitant que la première face d'appui 159 et la deuxième face d'appui 163 viennent en contact l'une avec l'autre.

Un tel coulisseau 150 est particulièrement prévu pour fonctionner dans le cas de charges orientées parallèlement à une première direction de charges 25 perpendiculaire à la paroi 10. Un tel ensemble coulissant 100 est donc relativement facile à réaliser, peu encombrant et silencieux. En outre, si les billes 156, 160 ou les plans de roulement 174a-b s'usent, le premier socle 154 et le deuxième socle 158 s'écartent l'un de l'autre sous l'effet de la pièce intermédiaire 166 qui se décompresse et compense l'écartement du premier socle 154 et du deuxième socle 158 permettant ainsi la compensation des jeux introduits par l'usure.

L'élément 30 est fixé à l'un des socles 154, 158, ici le premier socle 154.

A cette fin, dans le mode de réalisation de l'invention présenté à la Fig. 1, le premier socle 154 comporte une extension 180 solidaire de l'élément 30. L'extension 180 s'étend depuis le premier socle 154 au-delà du deuxième socle 158 et ce dernier est monté coulissant le long de l'extension 180 lorsque la pièce intermédiaire 166 se compresse ou se décompresse. La fixation entre l'extension 180 et l'élément 30 s'effectue ici par l'intermédiaire de l'entretoise 32.

Pour assurer la bonne mise en place de la pièce intermédiaire 166 par rapport au premier socle 154 et au deuxième socle 158, la première face d'appui 159 comporte un premier logement 182 et la deuxième face d'appui 163 comporte un deuxième logement 184, et la pièce intermédiaire 166 loge pour partie dans le premier logement 182 et pour partie dans le deuxième logement 184.

Pour assurer un bon transfert des efforts lors de la translation du coulisseau 150 entre le premier socle 154 et le deuxième socle 158, la pièce intermédiaire 166 comporte un premier plot 185 et un deuxième plot 186, chacun s'étendant selon une direction perpendiculaire entre la première face d'appui 159 et la deuxième face d'appui 163, et le premier socle 154 comporte au niveau de sa première face d'appui 159 un alésage dans lequel loge le premier plot 185, et le deuxième socle 158 comporte au niveau de sa deuxième face d'appui 163 un alésage dans lequel loge le deuxième plot 186.

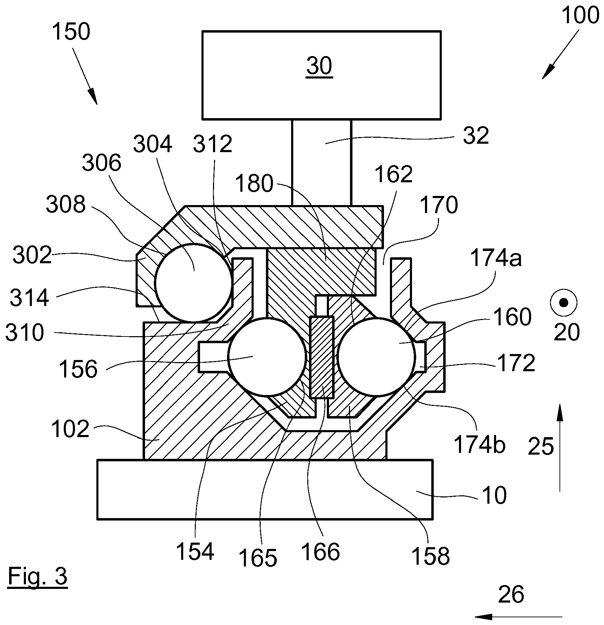

Dans la variante de réalisation de la Fig. 3, le coulisseau 150 est particulièrement prévu pour fonctionner dans le cas où il subit également des charges orientées parallèlement à une deuxième direction de charges 26 parallèle à la paroi 10 et donc perpendiculaire à la première direction de charges 25.

Le coulisseau 150 comporte alors un troisième socle 302 qui est fixé aux deux premiers socles 154 et 158, ici plus particulièrement à l'extension 180 du premier socle 154.

Dans le mode de réalisation de l'invention de la Fig. 3, l'élément 30 est fixé au troisième socle 302 par l'intermédiaire de l'entretoise 32.

Le troisième socle 302 comporte une troisième face portante 304.

La troisième face portante 304 porte deux troisièmes billes 306 qui sont disposées l'une à côté de l'autre parallèlement à la direction de translation 20. A cette fin, dans le mode de réalisation de l'invention présenté ici, pour chaque troisième bille 306, la troisième face portante 304 comporte un évidement hémisphérique 308 dans lequel la troisième bille 306 est disposée et libre en rotation.

Le rail 102 comporte également une équerre 310 qui est ici constituée en partie par une branche du U constituant la rainure 170. L'équerre 310 présente un premier plan de roulement 312 parallèle à la direction de translation 20 et à la première direction de charges 25 et un deuxième plan de roulement 314 parallèle à la direction de translation 20 et à la deuxième direction de charges 26.

Chaque troisième bille 306 est en appui et roule à la fois contre le premier plan de roulement 312 et le deuxième plan de roulement 314.

## Revendications

1. Ensemble coulissant (100) pour habitacle de véhicule et comportant :
- un rail (102) qui est destiné à être fixé à une paroi (10) du véhicule et s'étendant selon une direction de translation (20),
- un coulisseau (150) mobile en translation le long du rail (102) et destiné à être solidaire d'un élément (30) du véhicule, où le coulisseau (150) comporte :
- un premier socle (154) qui comporte une première face portante (157) et une première face d'appui (159) opposée à la première face portante (157),
- deux premières billes (156) disposées l'une à côté de l'autre parallèlement à la direction de translation (20) et portées libres en rotation par la première face portante (157),
- un deuxième socle (158) qui comporte une deuxième face portante (161) et une deuxième face d'appui (163) opposée à la deuxième face portante (161),
- deux deuxièmes billes (160) disposées l'une à côté de l'autre parallèlement à la direction de translation (20) et portées libres en rotation par la deuxième face portante (161),
- une pièce intermédiaire (166) réalisée dans un matériau compressible et positionnée entre la première face d'appui (159) et la deuxième face d'appui (163),
où le rail (102) comporte une rainure (170) en U dans laquelle loge le coulisseau (150) de manière à ce que les premières billes (156) soient contre une première branche du U et de manière à ce que les deuxièmes billes (160) soient contre une deuxième branche du U, et où chaque branche du U comporte une goulotte (172) présentant deux plans de roulement (174a-b) contre lesquels roulent les billes (156, 160) considérées.

2. Ensemble coulissant (100) selon la revendication 1, **caractérisé en ce que** le premier socle (154) comporte une extension (180) qui s'étend depuis le premier socle (154) au-delà du deuxième socle (158) et **en ce que** le deuxième socle (158) est monté coulissant le long de l'extension (180).

3. Ensemble coulissant (100) selon l'une des revendications 1 ou 2, **caractérisé en ce que** la première face d'appui (159) comporte un premier logement (182), **en ce que** la deuxième face d'appui (163) comporte un deuxième logement (184), et **en ce que** la pièce intermédiaire (166) loge pour partie dans le premier logement (182) et pour partie dans le deuxième logement (184).

4. Ensemble coulissant (100) selon l'une des revendications 1 à 3, **caractérisé en ce que** la pièce intermédiaire (166) comporte un premier plot (185) et un deuxième plot (186), **en ce que** chacun s'étend selon une direction perpendiculaire entre la première face d'appui (159) et la deuxième face d'appui (163), **en ce que** le premier socle (154) comporte au niveau de sa première face d'appui (159) un alésage dans lequel loge le premier plot (185), et **en ce que** le deuxième socle (158) comporte au niveau de sa deuxième face d'appui (163) un alésage dans lequel loge le deuxième plot (186).

5. Ensemble coulissant (100) selon l'une des revendications 1 à 4, **caractérisé en ce que** le coulisseau (150) comporte un troisième socle (302) fixé aux deux premiers socles (154, 158), **en ce que** le troisième socle (302) comporte une troisième face portante (304), **en ce que** ledit ensemble coulissant (100) comporte deux troisièmes billes (306) disposées l'une à côté de l'autre parallèlement à la direction de translation (20) et portées libres en rotation par la troisième face portante (304), **en ce que** le rail (102) comporte une équerre (310), **en ce que** l'équerre (310) présente un premier plan de roulement (312) et un deuxième plan de roulement (314), et **en ce que** chaque troisième bille (306) est en appui et roule contre le premier plan de roulement (312) et le deuxième plan de roulement (314).

6. Véhicule comportant une paroi (10), un élément (30) et un ensemble coulissant (100) selon l'une des revendications précédentes où le rail (102) est fixé à la paroi (10) et où l'élément (30) est fixé au coulisseau (150).

## Patentansprüche

1. Verschiebbare Anordnung (100) für einen Fahrgastraum, aufweisend:
- eine Schiene (102), die dazu bestimmt ist, an einer Wand (10) des Fahrzeugs befestigt zu werden, und die sich entlang einer Translationsrichtung (20) erstreckt,
- einen Schieber (150), der entlang der Schiene (102) translationsbeweglich und dazu bestimmt ist, fest mit einem Element (30) des Fahrzeugs verbunden zu sein, wobei der Schieber (150) Folgendes aufweist:
- einen ersten Sockel (154), der eine erste tragende Fläche (157) und eine erste Stützfläche (159) aufweist, die der ersten tragenden Fläche (157) gegenüberliegt,
- zwei erste Kugeln (156), die nebeneinander, parallel zu der Translationsrichtung (20) angeordnet sind und frei drehend von der ersten tragenden Fläche (157) getragen werden,
einen zweiten Sockel (158), der eine zweite tragende Fläche (161) und eine zweite Stützfläche (163) aufweist, die der zweiten tragenden Fläche (161) gegenüberliegt,
- zwei zweite Kugeln (160), die nebeneinander, parallel zu der Translationsrichtung (20) angeordnet sind und frei drehend von der zweiten tragenden Fläche (161) getragen werden,
- ein aus einem zusammendrückbaren Material hergestelltes Zwischenstück (166), das zwischen der ersten Stützfläche (159) und der zweiten Stützfläche (163) positioniert ist,
wobei die Schiene (102) eine U-förmige Nut (170) aufweist, in der der Schieber (150) so angeordnet ist, dass die ersten Kugeln (156) an einem ersten Schenkel des U anliegen, und so, dass die zweiten Kugeln (160) an einem zweiten Schenkel des U anliegen, und wobei jeder Schenkel des U eine Rinne (172) aufweist, die zwei Rollebenen (174a - b) aufweist, an denen die betreffenden Kugeln (156, 160) rollen.

2. Verschiebbare Anordnung (100) nach Anspruch 1, **dadurch gekennzeichnet, dass** der erste Sockel (154) eine Verlängerung (180) aufweist, die sich von dem ersten Sockel (154) über den zweiten Sockel (158) hinaus erstreckt, und dass der zweite Sockel (158) entlang der Verlängerung (180) verschiebbar montiert ist.

3. Verschiebbare Anordnung (100) nach einem der Ansprüche 1 oder 2, **dadurch gekennzeichnet, dass** die erste Stützfläche (159) eine erste Aufnahme (182) aufweist, dass die zweite Stützfläche (163) eine zweite Aufnahme (184) aufweist und dass das Zwischenstück (166) zum Teil in der ersten Aufnahme (182) und zum Teil in der zweiten Aufnahme (184) aufgenommen ist.

4. Verschiebbare Anordnung (100) nach einem der Ansprüche 1 bis 3, **dadurch gekennzeichnet, dass** das Zwischenstück (166) einen ersten Nocken (185) und einen zweiten Nocken (186) aufweist, dass sich jeder entlang einer senkrechten Richtung zwischen der ersten Stützfläche (159) und der zweiten Stützfläche (163) erstreckt, dass der erste Sockel (154) an seiner ersten Stützfläche (159) eine Bohrung aufweist, in der der erste Nocken (185) aufgenommen ist, und dass der zweite Sockel (158) an seiner zweiten Stützfläche (163) eine Bohrung aufweist, in der der zweite Nocken (186) aufgenommen ist.

5. Verschiebbare Anordnung (100) nach einem der Ansprüche 1 bis 4, **dadurch gekennzeichnet, dass** der Schieber (150) einen an den beiden ersten Sockeln (154, 158) befestigten dritten Sockel (302) aufweist, dass der dritte Sockel (302) eine dritte tragende Fläche (304) aufweist, dass die verschiebbare Anordnung (100) zwei dritte Kugeln (306) aufweist, die nebeneinander, parallel zu der Translationsrichtung (20) angeordnet sind und frei drehend von der dritten tragenden Fläche (304) getragen werden, dass die Schiene (102) ein Winkelstück (310) aufweist, dass das Winkelstück (310) eine erste Rollebene (312) und eine zweite Rollebene (314) aufweist und dass jede dritte Kugel (306) an der ersten Rollebene (312) und der zweiten Rollebene (314) anliegt und an diesen rollt.

6. Fahrzeug, aufweisend eine Wand (10), ein Element (30) und eine verschiebbare Anordnung (100) nach einem der vorhergehenden Ansprüche, wobei die Schiene (102) an der Wand (10) befestigt ist und wobei das Element (30) an dem Schieber (150) befestigt ist.

## Claims

1. Sliding assembly (100) for a motor vehicle passenger compartment, comprising:
- a rail (102) that is intended to be secured to a wall (10) of the vehicle and extends along a direction of translation (20),
- a slider (150) that is able to move in translation along the rail (102) and is intended to be secured to an element (30) of the vehicle, the slider (150) comprising:
- a first base (154) that comprises a first supporting face (157) and a first bearing face (159) opposite the first supporting face (157),
- two first balls (156) arranged one next to the other parallel to the direction of translation (20) and supported by the first supporting face (157) so as to be free to rotate,
- a second base (158) that comprises a second supporting face (161) and a second bearing face (163) opposite the second supporting face (161),
- two second balls (160) arranged one next to the other parallel to the direction of translation (20) and supported by the second supporting face (161) so as to be free to rotate,
- an intermediate part (166) made of a compressible material and positioned between the first bearing face (159) and the second bearing face (163),
the rail (102) comprising a U-shaped groove (170) that accommodates the slider (150) in such a way that the first balls (156) are against a first leg of the U, and in such a way that the second balls (160) are against a second leg of the U, and each leg of the U comprising a gutter (172) having two rolling planes (174a-b) against which the balls (156, 160) in question roll.

2. Sliding assembly (100) according to Claim 1, **characterized in that** the first base (154) comprises an extension (180) that extends from the first base (154) beyond the second base (158), and **in that** the second base (158) is mounted so as to be able to slide along the extension (180).

3. Sliding assembly (100) according to Claim 1 or 2, **characterized in that** the first bearing face (159) comprises a first recess (182), **in that** the second bearing face (163) comprises a second recess (184), and **in that** the intermediate part (166) is received partially in the first recess (182) and partially in the second recess (184).

4. Sliding assembly (100) according to one of Claims 1 to 3, **characterized in that** the intermediate part (166) comprises a first pad (185) and a second pad (186), **in that** each extends in a perpendicular direction between the first bearing face (159) and the second bearing face (163), **in that** the first base (154) comprises, at its first bearing face (159), a bore that receives the first pad (185), and **in that** the second base (158) comprises, at its second bearing face (163), a bore that receives the second pad (186).

5. Sliding assembly (100) according to one of Claims 1 to 4, **characterized in that** the slider (150) comprises a third base (302) secured to the first two bases (154, 158), **in that** the third base (302) comprises a third supporting face (304), **in that** said sliding assembly (100) comprises two third balls (306) arranged one next to the other parallel to the direction of translation (20) and supported by the third supporting face (304) so as to be free to rotate, **in that** the rail (102) comprises a bracket (310), **in that** the bracket (310) has a first rolling plane (312) and a second rolling plane (314), and **in that** each third ball (306) bears and rolls against the first rolling plane (312) and the second rolling plane (314).

6. Vehicle comprising a wall (10), an element (30) and a sliding assembly (100) according to one of the preceding claims, the rail (102) being secured to the wall (10), and the element (30) being secured to the slider (150).
